# EUROPÄISCHE PATENTSCHRIFT

(11) **EP 2 700 795 B1**
(45) Veröffentlichungstag und Bekanntmachung des Hinweises auf die Patenterteilung: **24.06.2015**
(21) Anmeldenummer: 13180043.5
(22) Anmeldetag: 12.08.2013
(51) Int. Cl.: F01N 5/02, F01N 3/04, F28D 21/00, F01N 3/00

(54) **Wärmeübertrager**
Heat transfer assembly
Échangeur de chaleur

(30) Priorität: 20.08.2012 DE 102012214759
(43) Veröffentlichungstag der Anmeldung: 26.02.2014
(73) Patentinhaber: Eberspächer Exhaust Technology GmbH & Co. KG, 66539 Neunkirchen (DE)
(72) Erfinder: Oesterle, Jörg, 89150 Laichingen (DE); Dong, Ming, 70374 Stuttgart (DE); Bürkle, Anika, 70686 Remseck (DE); Hettel, Angela, 70771 Leinfelden-Echterdingen (DE); Spieth, Arnulf, 73269 Hochdorf (DE); Kurpejovic, Enver, 73703 Esslingen (DE)
(74) Vertreter: BRP Renaud & Partner mbB Rechtsanwälte Patentanwälte Steuerberater

(56) Entgegenhaltungen:
- EP-A2- 0 717 251
- EP-A2- 2 378 578
- WO-A1-2007/026432
- WO-A2-2010/112571
- DE-A1-102010 022 225

## Beschreibung

Die vorliegende Erfindung betrifft einen Wärmeübertrager für eine Abgasanlage einer Brennkraftmaschine, insbesondere eines Kraftfahrzeugs, mit den Merkmalen des Oberbegriffs des Anspruchs 1.

Aus der DE 10 2010 022 225 A1 ist ein Wärmeübertrager bekannt, der mehrere Heizrohre zum Führen von heißem Abgas der Brennkraftmaschine, mehrere Kühlrohre zum Führen eines flüssigen Kühlmittels und mehrere thermoelektrische Generatoren zum Erzeugen einer elektrischen Spannung aus einer Temperaturdifferenz umfasst, wobei die thermoelektrischen Generatoren jeweils zwischen einem solchen Heizrohr und einem solchen Kühlrohr angeordnet sind. Des Weiteren sind die Heizrohre, die thermoelektrischen Generatoren und die Kühlrohre in einer Stapelrichtung benachbart zueinander angeordnet und bilden einen Stapel.

Ein thermoelektrischer Generator kann unter Ausnutzung des sogenannten Seebeck-Effekts einen Wärmestrom in einen elektrischen Strom bzw. eine Temperaturdifferenz in eine elektrische Spannung wandeln. Der Seebeck-Effekt beruht dabei auf einer Invertierung des Pelltier-Effekts. Derartige thermoelektrische Generatoren lassen sich daher zur Wärmerückgewinnung bzw. zur Gewinnung elektrischer Energie aus Wärme nutzen und können dementsprechend z.B. in Abgasanlagen von Brennkraftmaschinen, vorzugsweise in Kraftfahrzeugen, zur Anwendung kommen, um den energetischen Wirkungsgrad der Brennkraftmaschine bzw. des Fahrzeugs zu verbessern.

Um die Wärmeübertragung zwischen den thermoelektrischen Generatoren und den Heiz- und Kühlrohren zu verbessern, ist es außerdem üblich, den Stapel in der Stapelrichtung mit einer Druckkraft zu belasten. Damit dabei die Heiz- und Kühlrohre in ihren Querschnitten nicht einbeulen, ist beim bekannten Wärmeübertrager in den Heiz- und Kühlrohren jeweils eine Stützstruktur angeordnet, die das jeweilige Rohr von innen aussteift. Eine derartige Stützstruktur kann dabei auch als Rohr, also als Stützrohr ausgestaltet sein.

Die vorliegende Erfindung beschäftigt sich mit dem Problem, für einen Wärmeübertrager der eingangs genannten Art eine verbesserte Ausführungsform anzugeben, die sich insbesondere durch einen verbesserten energetischen Wirkungsgrad auszeichnet.

Die Erfindung beruht auf dem allgemeinen Gedanken, im jeweiligen Heiz- oder Kühlrohr mehrere derartige Stützrohre anzuordnen, wobei zumindest zwei derartige Stützrohre geometrisch unterschiedlich sind. Es hat sich gezeigt, dass sich durch unterschiedliche Geometrien, insbesondere unterschiedliche Rohrlängen und/oder unterschiedliche Rohrenden und/oder unterschiedliche Rohrquerschnitte, in Verbindung mit unterschiedlichen Positionen innerhalb des jeweiligen Heiz- oder Kühlrohrs gezielte Strömungsführungen bzw. Strömungslenkungen für das Abgas im jeweiligen Heizrohr bzw. für das Kühlmittel im jeweiligen Kühlrohr realisieren lassen. Durch eine gezielte Strömungsführung innerhalb der Kühlrohre bzw. innerhalb der Heizrohre, lässt sich dann insbesondere die Temperaturverteilung innerhalb des jeweiligen Rohrs quer zur Strömungsrichtung homogenisieren. Eine homogene Temperaturverteilung innerhalb der Kühl- und Heizrohre führt auch an den thermoelektrischen Generatoren zu einer homogenen thermischen Belastung, wodurch die Effizienz der thermoelektrischen Wandlung innerhalb des jeweiligen thermoelektrischen Generators verbessert werden kann.

Da die Kühl- und Heizrohre innerhalb eines derartigen, mit thermoelektrischen Generatoren ausgestatteten Wärmeübertragers in der Regel vergleichsweise flache Querschnitte besitzen, kann sich innerhalb des jeweiligen Rohrs quer zur Strömungsrichtung ein Temperaturgradient einstellen, insbesondere dann, wenn ein Einlassquerschnitt und/oder ein Auslassquerschnitt des jeweiligen Rohrs signifikant kleiner ist als der jeweilige Rohrquerschnitt im Bereich der thermoelektrischen Generatoren. Mit Hilfe der zur Strömungsführung bzw. Strömungsleitung angeordneten und gestalteten Stützrohre kann dieser Temperaturgradient reduziert werden, wodurch eine Homogenisierung der Temperatur innerhalb des jeweiligen Rohrs quer zur Strömungsrichtung des jeweiligen Mediums erreicht werden kann.

Entsprechend einer vorteilhaften Ausführungsform kann der Stapel in der Stapelrichtung mit einer Druckkraft belastet sein, die das jeweilige Heizrohr, den jeweiligen thermoelektrischen Generator und das jeweilige Kühlrohr miteinander verspannt. Des Weiteren kann bei einer derartigen Ausführungsform mit druckbelastetem Stapel vorgesehen sein, dass das jeweilige Stützrohr einen runden Rohrquerschnitt aufweist und durch die Druckkraft federelastisch verformt ist. Mit anderen Worten, die bei dieser Ausführungsform verwendeten Stützrohre dienen als Federn, um innerhalb des jeweiligen Kühl- oder Heizrohrs die in der Stapelrichtung gegenüberliegenden Wandabschnitte nach außen zu drücken, um hierdurch eine Gegenkraft zu der am Stapel angreifenden Druckkraft zu erzeugen. Insbesondere besitzen die Stützrohre somit in einem entspannten Zustand des Stapels, bei dem die Druckkraft fehlt, einen anderen Querschnitt als in einem gespannten Zustand, in dem die Druckkraft am Stapel angreift. Die Stützrohre bilden dadurch keine starren Stützstrukturen, sondern elastische Federn, um die Druckkraft innerhalb des Stapels aufzunehmen. Hierdurch lassen sich insbesondere thermisch bedingte Spannungsänderungen kompensieren.

Bei einer anderen vorteilhaften Ausführungsform sind die Stützrohre innerhalb des jeweiligen Kühl- oder Heizrohrs quer zur ihrer Längsrichtung voneinander beabstandet. Hierdurch stehen die einzelnen Stützrohre nicht miteinander in Kontakt. Ferner berühren die Stützrohre das jeweilige Heiz- oder Kühlrohr gemäß einer vorteilhaften Ausführungsform ausschließlich radial bezüglich ihrer Längsrichtung.

Entsprechend einer anderen, besonders vorteilhaften Ausführungsform sind die Stützrohre endseitig offen und sind im jeweiligen Heiz- oder Kühlrohr so angeordnet, dass sie vom Abgas oder vom Kühlmittel umströmbar und durchströmbar sind. Somit bilden die Stützrohre innerhalb des jeweiligen Kühl- oder Heizrohrs nicht nur durch ihre Außenkontur eine Führungs- bzw. Lenkungsfunktion für das Abgas bzw. für das Kühlmittel, sondern auch durch ihre Innenkontur, da sie vom Abgas bzw. Kühlmittel durchströmbar sind.

Zweckmäßig besitzen die Stützrohre jeweils einen in der Umfangsrichtung geschlossenen Querschnitt, wodurch besonders hohe Druckkräfte abgestützt werden können. Grundsätzlich ist es jedoch möglich, zumindest eines der Stützrohre mit einem offenen Querschnitt zu versehen, der beispielsweise C-förmig ausgestaltet sein kann. Das jeweilige Stützrohr besitzt dann einen Schlitz, der sich durchgehend entlang der gesamten Rohrlänge erstreckt.

Ferner besitzen die Stützrohre bevorzugt eine radial geschlossene Rohrwand. Grundsätzlich ist jedoch auch eine Ausführungsform möglich, bei der zumindest ein Stützrohr wenigstens eine radiale Öffnung aufweist, welche die Rohrwand durchdringt, so dass ein Rohrinnenraum mit dem Inneren des jeweiligen Heiz- oder Kühlrohrs fluidisch verbunden ist. Durch diese radialen Öffnungen, die z.B. rund oder schlitzförmig oder als Perforation realisiert sein können, lassen sich die Federwirkung des Stützrohrs und seine Strömungsführungswirkung einstellen. Gemäß einer anderen vorteilhaften Ausführungsform kann zumindest ein derartiges Stützrohr an seiner Außenseite zumindest einen abgeflachten Umfangsbereich aufweisen, der sich flächig an dem jeweiligen Wandabschnitt des jeweiligen Kühl- oder Heizrohrs abstützt. Bevorzugt ist dabei eine Variante, bei der das jeweilige Stützrohr zwei diametral gegenüberliegende, abgeflachte Umfangsbereiche aufweist, die sich flächig an den Wandabschnitten des jeweiligen Kühl- oder Heizrohrs abstützen. Der jeweilige Umfangsbereich kann dabei insbesondere eben sein. Dies ist insbesondere bei Stützrohren der Fall, die einen runden Querschnitt besitzen. Runde Querschnitte sind beispielsweise kreisförmige oder elliptische oder ovale Querschnitte. Durch derartige Abflachungen ist eine flächige Kontaktierung zwischen den Stützrohren und dem jeweiligen Heiz- oder Kühlrohr möglich, wodurch die Flächenpressung in der Wandung des jeweiligen Rohrs reduziert werden kann. Des Weiteren ermöglicht eine derartige flächige Kontaktierung einen verbesserten Wärmeübergang zwischen den Stützrohren und dem jeweiligen Heiz- oder Kühlrohr. Dies ist insbesondere dann von Vorteil, wenn die Stützrohre vom Abgas bzw. vom Kühlmittel auch durchströmt werden.

Gemäß einer anderen vorteilhaften Ausführungsform kann das jeweilige Kühl- oder Heizrohr an seinen Längsenden einen Einlassbereich und einen Auslassbereich aufweisen, die sich in einer Rohrquerrichtung erstrecken, die quer zur Rohrlängsrichtung und quer zur Stapelrichtung verläuft. An diesem Einlassbereich kann dann ein Einlassstutzen in der Rohrquerrichtung angeschlossen sein. An diesem Auslassbereich kann ein Auslassstutzen in der Rohrquerrichtung gegensinnig oder gleichsinnig zum Einlassstutzen angeschlossen sein. Durch diese Bauweise wird das Abgas oder Kühlmittel quer zur Längsrichtung des jeweiligen Rohrs und somit quer zur Hauptströmungsrichtung innerhalb des jeweiligen Rohrs zugeführt bzw. abgeführt. Hierdurch baut der jeweilige Stapel in der Längsrichtung vergleichsweise kompakt. Gleichzeitig kann bei einer derartigen Bauweise die Anordnung und Geometrie der Stützrohre dazu genutzt werden, die ankommende Strömung sowie die abgehende Strömung gezielt so umzulenken, dass sich innerhalb des jeweiligen Rohrs die gewünschte, möglichst homogene Temperaturverteilung einstellen kann.

Entsprechend einer vorteilhaften Weiterbildung können die Stützrohre in ihrer Längsrichtung unterschiedlich tief in den Einlassbereich bzw. in den Auslassbereich eintauchen. Durch diese Maßnahme kann besonders einfach die gewünschte Umlenkung am Einlassbereich bzw. am Auslassbereich realisiert werden.

Bei einer anderen vorteilhaften Weiterbildung kann zumindest ein Stützrohr zumindest ein abgeschrägtes Rohrende aufweisen, wobei das jeweilige Rohrende derart abgeschrägt ist, dass eine Rohröffnung, die sich am jeweiligen Rohrende befindet, dem Einlassstutzen bzw. dem Auslassstutzen zugewandt ist. Beispielsweise kann eine dem Einlassstutzen zugewandte Rohröffnung am einlassseitigen Rohrende eine Strömungsumlenkung vom Einlassbereich in das jeweilige Stützrohr unterstützen. Analog dazu kann eine dem Auslassstutzen zugewandte Rohröffnung am auslassseitigen Rohrende eine Umlenkung der aus dem jeweiligen Stützrohr austretenden Strömung im Auslassbereich unterstützen.

Bei einer anderen vorteilhaften Ausführungsform kann das jeweilige Heiz- oder Kühlrohr in Halbschalenbauweise hergestellt sein, so dass es zwei Halbschalen aufweist, beispielsweise eine Oberschale und eine Unterschale. Die Stützrohre sind dann zweckmäßig nur an einer der beiden Halbschalen befestigt. Hierdurch ergibt sich ein besonders einfacher Herstellungsprozess für den Wärmeübertrager.

Die Halbschalenbauweise kann insbesondere auch so gestaltet sein, dass jede Halbschale einen halben Einlassstutzen und einen halben Auslassstutzen umfasst, so dass die Stutzen erst beim Zusammenbau der Halbschalen komplettiert werden.

Bei einer alternativen Ausführungsform kann das jeweilige Heiz- oder Kühlrohr in einer Segmentbauweise realisiert sein, bei der ein den Einlassstutzen umfassendes Endstück und ein den Auslassstutzen umfassendes Endstück stirnseitig an ein rohrförmiges oder mantelförmiges, die Stützrohre enthaltendes Mittelstück angebaut werden.

Gemäß einer anderen vorteilhaften Ausführungsform kann vorgesehen sein, dass sich die Stützrohre innerhalb des jeweiligen Kühl- oder Heizrohrs geradlinig und parallel zu einer Längsrichtung des jeweiligen Kühl- oder Heizrohrs erstrecken. Hierdurch ergibt sich eine besonders einfach realisierbare Ausführungsform. Alternativ ist auch eine Ausführungsform denkbar, bei der zumindest eines der Stützrohre sich nicht geradlinig und/oder nicht parallel zur Längsrichtung des Kühl- oder Heizrohrs erstreckt. Beispielsweise kann sich ein solches Stützrohr schlangenlinienförmig oder zick-zack-förmig erstrecken.

Zweckmäßig besitzen die Stützrohre jeweils für sich einen in der jeweiligen Rohrlängsrichtung konstanten Querschnitt. Grundsätzlich ist jedoch auch eine Ausführungsform denkbar, bei welcher wenigstens ein Stützrohr einen in der Rohrlängsrichtung variierenden Rohrquerschnitt besitzt. Beispielsweise kann ein derartiges Stützrohr kreisförmige Endquerschnitte aufweisen, die stetig in einem mittleren elliptischen oder ovalen Querschnitt übergehen. Durch Stützrohre, deren Querschnittsgeometrie in der Rohrlängsrichtung variiert, lassen sich insbesondere die Stützkräfte, vorzugsweise die Federkräfte, in der Längsrichtung des jeweiligen Heiz- oder Kühlrohrs variieren, beispielsweise um diese an die jeweilige Verformungscharakteristik des jeweiligen Rohrs anzugleichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine, deren Abgasanlage einen Wärmeübertrager enthält,
- Fig. 2: einen stark vereinfachten Längsschnitt des Wärmeübertragers mit vereinfacht dargestellten Heiz- und Kühlrohren,
- Fig. 3: eine Seitenansicht eines solchen Heiz- oder Kühlrohrs mit daran angeordneten thermoelektrischen Generatoren,
- Fig. 4: eine isometrische Ansicht des Heiz- oder Kühlrohrs mit transparent dargestellten thermoelektrischen Generatoren und mit transparent dargestellter Wandung,
- Fig. 5: ein Querschnitt des Rohrs in einer isometrischen Ansicht,
- Fig. 6: ein Längsschnitt des Rohrs in einer Draufsicht,
- Fig. 7: ein Längsschnitt des Rohrs in einer isometrischen Ansicht,
- Fig. 8: ein vereinfachter Querschnitt des Rohrs in einem ungespannten Zustand,
- Fig. 9: der Querschnitt des Rohrs aus Fig. 8 in einem gespannten Zustand,
- Fig. 10: ein Querschnitt des Rohr bei einer anderen Ausführungsform,
- Fig. 11: ein Längsschnitt des Rohrs in einer Draufsicht bei einer anderen Ausführungsform.

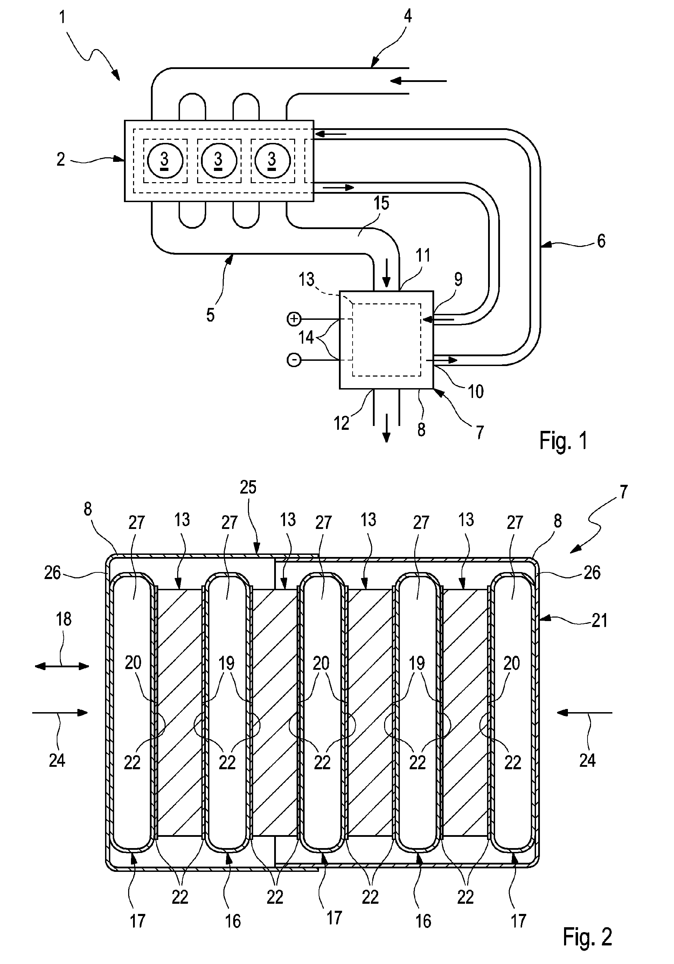

Entsprechend Fig. 1 umfasst eine Brennkraftmaschine 1, die bevorzugt in einem Kraftfahrzeug zum Einsatz kommen kann, einen Motorblock 2, der mehrere Brennräume 3 enthält, eine Frischluftanlage 4 zur Versorgung der Brennräume 3 mit Frischluft und eine Abgasanlage 5 zum Abführen von Abgas von den Brennräumen 3. Des Weiteren ist die Brennkraftmaschine 1 mit einem Kühlkreis 6 ausgestattet, mit dessen Hilfe der Motorblock 2 gekühlt werden kann. Dabei ist klar, dass im Kühlkreis 6 außerdem ein hier nicht gezeigter Kühler, gegebenenfalls in Verbindung mit einem Gebläse, vorgesehen sein kann, um das im Kühlkreis 6 geführte Kühlmittel entsprechend kühlen zu können. Der zum Kühlen des Motorblocks 2 dienen Kühlkreis 6 kann auch als Motor-Kühlkreis oder Primär-Kühlkreis bezeichnet werden. Zusätzlich zu diesem Primär-Kühlkreis 6 kann optional ein hier nicht gezeigter separater Kühlkreis vorgesehen sein, der auch als Sekundär-Kühlkreis bezeichnet werden kann und der insbesondere einen eigenen Kühler, optional ein eigenes Gebläse, und ein separates Kühlmittel aufweisen kann. Der Sekundär-Kühlkreis kann insbesondere auf einem anderen Temperaturniveau betrieben werden als der Primär-Kühlkreis 6.

Die Brennkraftmaschine 1 ist außerdem mit einem Wärmetauscher oder Wärmeübertrager 7 ausgestattet, dessen Gehäuse 8 einen Kühlmitteleinlass 9, einen Kühlmittelauslass 10, einen Heizmitteleinlass 11 und einen Heizmittelauslass 12 aufweist. Der Wärmeübertrager 7 ist über seinen Heizmitteleinlass 11 und seinen Heizmittelauslass 12 in die Abgasanlage 5 bzw. in eine Abgasleitung 15 der Abgasanlage 5 fluidisch eingebunden, wobei das Abgas im Wärmeübertrager 7 als Heizmittel bzw. Heizfluid dient. Ferner ist der Wärmeübertrager 7 über seinen Kühlmitteleinlass 9 und seinem Kühlmittelauslass 10 in den Kühlkreis 6 eingebunden, dessen Kühlmittel auch im Wärmeübertrager 7 als Kühlmittel bzw. Kühlfluid dient. Im gezeigten Beispiel ist der Wärmeübertrager 7 somit in den Primär-Kühlkreis 6 eingebunden. Bei einer alternativen Ausführungsform kann der Wärmeübertrager 7 auch in den vorstehend genannten Sekundär-Kühlkreis eingebunden sein.

Der Wärmeübertrager 7 enthält außerdem zumindest einen thermoelektrischen Generator 13, der im Inneren des Wärmeübertragers 7 mit dem Heizfluid und mit dem Kühlfluid wärmeübertragend gekoppelt ist. Am Gehäuse 8 sind außerdem elektrische Anschlüsse 14 ausgebildet, die mit dem jeweiligen thermoelektrischen Generator 13 entsprechend elektrisch verbunden sind.

Entsprechend Fig. 2 umfasst der Wärmeübertrager 7 mehrere Heizrohre 16 zum Führen des Heizfluids, also des Abgases, mehrere Kühlrohre 17 zum Führen des Kühlfluids, also des Kühlmittels und mehrere thermoelektrische Generatoren 13, die in einer Stapelrichtung 18 jeweils zwischen einem Heizrohr 16 und einem Kühlrohr 17 angeordnet sind. Der jeweilige thermoelektrische Generator 13 weist eine Warmseite 19 und eine Kaltseite 20 auf, die in der Stapelrichtung 18 voneinander abgewandt sind. Die Anordnung der thermoelektrischen Generatoren 13 und der Heizrohre 16 sowie der Kühlrohre 17 bildet einen Stapel 21, in dem die jeweilige Warmseite 19 einem Heizrohr 16 zugewandt ist und in dem die jeweilige Kaltseite 20 einem Kühlrohr 17 zugewandt ist. Im Beispiel der Fig. 2 ist außerdem in der Stapelrichtung 18 zwischen dem jeweiligen thermoelektrischen Generator 13 und dem jeweiligen Rohr 16, 17 jeweils eine Wärmeleitschicht 22 angeordnet, bei der es sich vorzugsweise um eine Graphitfolie handelt, die im Folgenden ebenfalls mit 22 bezeichnet werden kann.

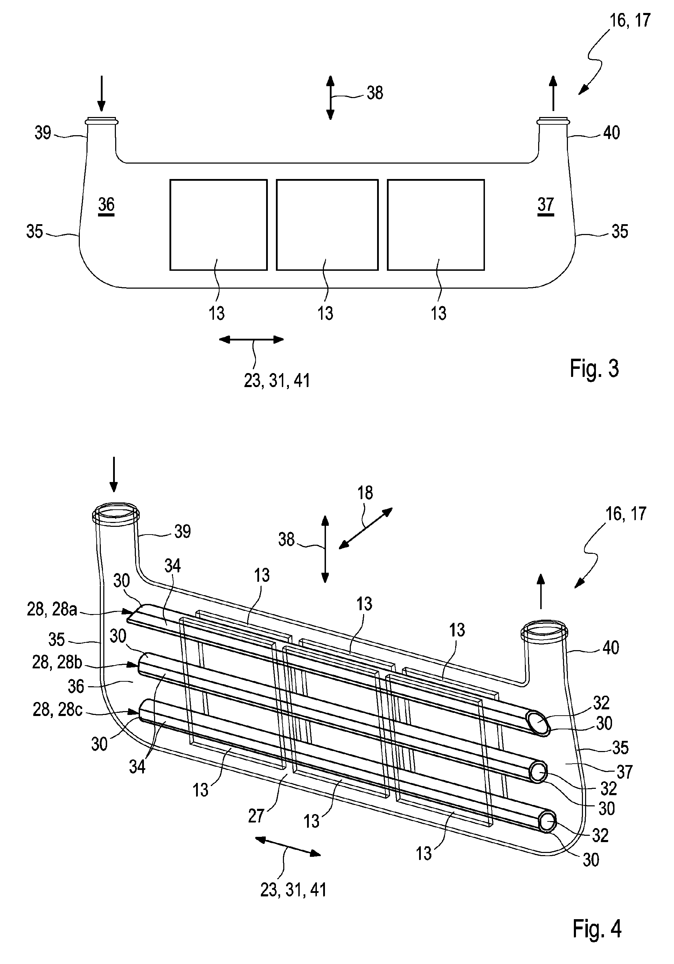

In der Ansicht der Fig. 2 ist in einem nicht näher bezeichneten Zwischenraum, der sich in der Stapelrichtung 18 zwischen zwei benachbarten Rohren 16, 17 befindet, jeweils nur ein einziger thermoelektrischer Generator 13 erkennbar. Es ist klar, dass in dem jeweiligen Zwischenraum in einer z.B. in Fig. 3 durch einen Doppelpfeil angedeuteten Längsrichtung 23 des Stapels 21, die in Fig. 2 senkrecht auf der Zeichnungsebene steht, auch mehrere derartige thermoelektrische Generatoren 13 hintereinander angeordnet sein können. Dementsprechend zeigen die Fig. 3 und 4 Ausführungsformen, bei denen rein exemplarisch und ohne Beschränkung der Allgemeinheit jeweils drei derartige thermoelektrische Generatoren 13 in der Stapellängsrichtung 23 hintereinander angeordnet sind.

Entsprechend Fig. 2 ist der Stapel 21 entsprechend Pfeilen 24 in der Stapelrichtung 18 verspannt, wodurch sich die Rohre 16, 17 in der Stapelrichtung 18 über die Graphitfolie 22 am jeweiligen thermoelektrischen Generator 13 vorgespannt abstützen. Die Vorspannkraft 24 wird im Beispiel der Fig. 2 mit Hilfe einer Vorspanneinrichtung 25 realisiert, die im Gehäuse 8 des Wärmeübertragers 7 angeordnet sein kann oder wie im gezeigten Beispiel durch das Gehäuse 8 des Wärmeübertragers 7 selbst gebildet sein kann. Die Vorspanneinrichtung 25 umfasst insbesondere zwei Endplatten oder Endböden 26, die in der Stapelrichtung 18 beiderseits des Stapels 21 angeordnet sind und in der Stapelrichtung 18 zwischen sich den Stapel 21 aufnehmen. Dabei können die Endplatten 26 jeweils am äußersten Rohr 16 bzw. 17 des Stapels 21 anliegen. Ferner können die Endplatten 26 mit Hilfe von hier nicht gezeigten Zugankern aufeinander zu verspannt sein, wodurch die in der Stapelrichtung 18 orientierte Vorspannkraft 24 erzeugt und auf den Stapel 21 übertragen wird. Die Vorspannkraft 24 ist zur Erzeugung einer Druckkraft orientiert, die im Folgenden ebenfalls mit 24 bezeichnet werden kann.

Damit die Verspannung des Stapels 21 nicht zu einem Einbeulen der Heizrohre 16 und der Kühlrohre 17 führt, kann in einem Innenraum 27 des jeweiligen Rohrs 16, 17 eine Stützstruktur angeordnet sein, die in den Fig. 2 und 3 jedoch nicht dargestellt ist. Diese Stützstruktur ist gemäß den Fig. 4 bis 11 durch mehrere Stützrohre 28 bzw. 28a, 28b und 28c gebildet. Bei den hier gezeigten Beispielen enthält das jeweilige Rohr 16, 17, bei dem es sich also um ein solches Heizrohr 16 oder um ein solches Kühlrohr 17 handelt, rein exemplarisch und ohne Beschränkung der Allgemeinheit genau drei derartige Stützrohre 28. Jedes Stützrohr 28 stützt sich in der Stapelrichtung 18 an einander zugewandten Wandabschnitten 29 des jeweiligen Rohrs 16, 17 ab. Erkennbar besitzen die drei Stützrohre 28 unterschiedliche Geometrien.

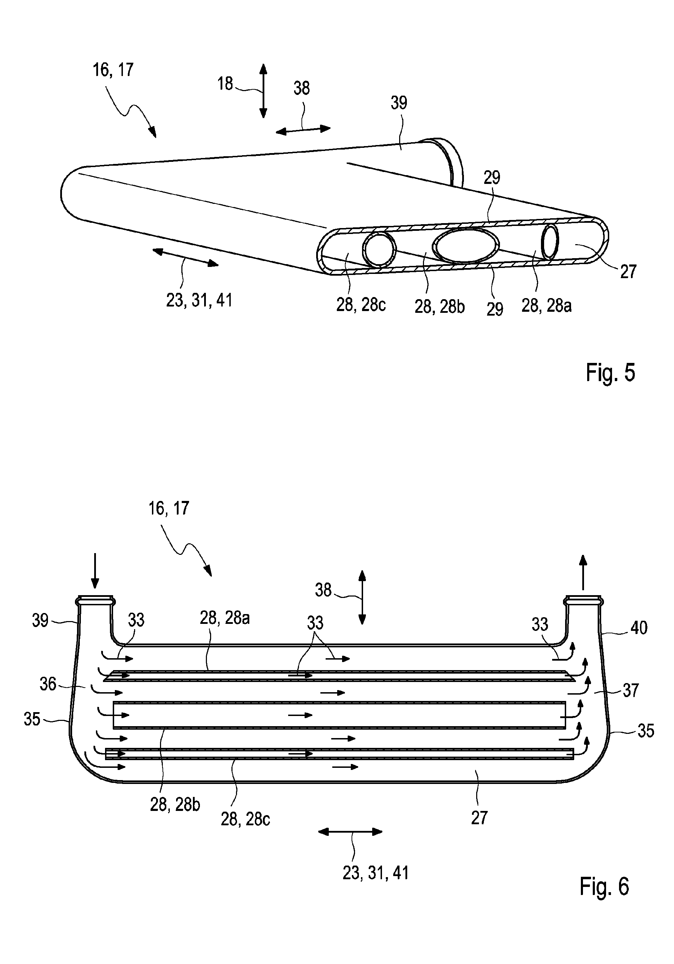

In Fig. 4 besitzen die drei Stützrohre 28 unterschiedliche Rohrlängen. Ferner unterscheidet sich das eine Stützrohr 28a durch abgeschrägte Rohrenden 30 von den anderen Stützrohren 28b und 28c. Bei den in den Fig. 5 bis 7, 10 und 11 gezeigten Ausführungsformen unterscheiden sich die Stützrohre 28 außerdem durch unterschiedliche Rohrquerschnitte. Beispielsweise zeigt das eine Stützrohr 28c einen kreisförmigen Rohrquerschnitt, während die beiden anderen Stützrohre 28a und 28b jeweils einen elliptischen Rohrquerschnitt zeigen. Dabei stützt sich das Stützrohr 28a in seinem elliptischen Querschnitt über seine lange Achse an den Wandabschnitten 29 ab, während sich das Stützrohr 28b in seinem elliptischen Querschnitt über die kurze Achse an den Wandschnitten 29 abstützt.

Die Stützrohre 28 sind innerhalb des jeweiligen Rohrs 16, 17 quer zur ihrer durch einen Doppelpfeil angedeuteten Längsrichtung 31, die parallel zur Stapellängsrichtung 23 verläuft, voneinander beabstandet, so dass sie sich gegenseitig nicht berühren. Ferner sind die Stützrohre 28 jeweils mit einem in der Umfangsrichtung geschlossenen Querschnitt versehen. Außerdem sind die Stützrohre 28 endseitig offen. Dementsprechend besitzt jedes Stützrohre 28 an seinem Rohrende 30 eine Rohröffnung 32. Besonders zweckmäßig sind die Stützrohre 28 innerhalb des jeweiligen Rohrs 16, 17 so angeordnet, dass sie vom Abgas bzw. vom Kühlmittel umströmbar und durchströmbar sind. Mögliche Strömungspfade sind in Fig. 6 rein exemplarisch durch Pfeile angedeutet und mit 33 bezeichnet.

Bei der in Fig. 4 gezeigten Ausführungsform besitzen die Stützrohre 28 jeweils zwei diametral gegenüberliegende, abgeflachte Umfangsbereiche 34. Im verspannten Zustand des Stapels 21 bzw. des jeweiligen Rohrs 16, 17 können sich die Stützrohre 28 mit diesen abgeflachten Umfangsbereichen 34 flächig an den Wandabschnitten 29 des jeweiligen Rohrs 16, 17 abstützen.

Bei den Ausführungsformen der Fig. 3 bis 7 und 11 besitzt das jeweilige Rohr 16, 17 an seinen Längsenden 35 einen Einlassbereich 36 und einen Auslassbereich 37. Einlassbereich 36 und Auslassbereich 37 liegen sich bezüglich der Rohrlängsrichtung 31 gegenüber und erstrecken sich jeweils in einer Rohrquerrichtung 38, die sich quer zur Längsrichtung 31 und quer zur Stapelrichtung 18 erstreckt. An den Einlassbereich 36 ist ein Einlassstutzen 39 in der Rohrquerrichtung 38 angeschlossen. Ebenso ist an den Auslassbereich 37 in der Rohrquerrichtung 38 ein Auslassstutzen 40 angeschlossen. Im Beispiel sind Einlassstutzen 39 und Auslassstutzen 40 gleichsinnig orientiert, so dass sie sich auf derselben Seite des jeweiligen Rohrs 16, 17 befinden. Wie sich insbesondere den Fig. 4, 6, 7 und 11 entnehmen lässt, tauchen die Stützrohre 28 in ihrer Längsrichtung 31 unterschiedlich tief in den Einlassbereich 36 und in den Auslassbereich 37 ein. Das eine Stützrohr 28a besitzt abgeschrägte Rohrenden 30, derart, dass die eine Rohröffnung 32 dem Einlassstutzen 39 zugewandt ist und dass die andere Rohröffnung 32 dem Auslassstutzen 40 zugewandt ist. Im Unterschied dazu sind die Rohröffnungen 32 der anderen Stützrohre 28b und 28c in der Rohrlängsrichtung 31, also axial orientiert.

Bei den Ausführungsformen der Fig. 4 bis 7 erstrecken sich die Stützrohre 28 innerhalb des jeweiligen Rohrs 16, 17 geradlinig und außerdem parallel zur Stapellängsrichtung 23, die mit einer Längsrichtung 41 des jeweiligen Rohrs 16, 17 zusammenfällt.

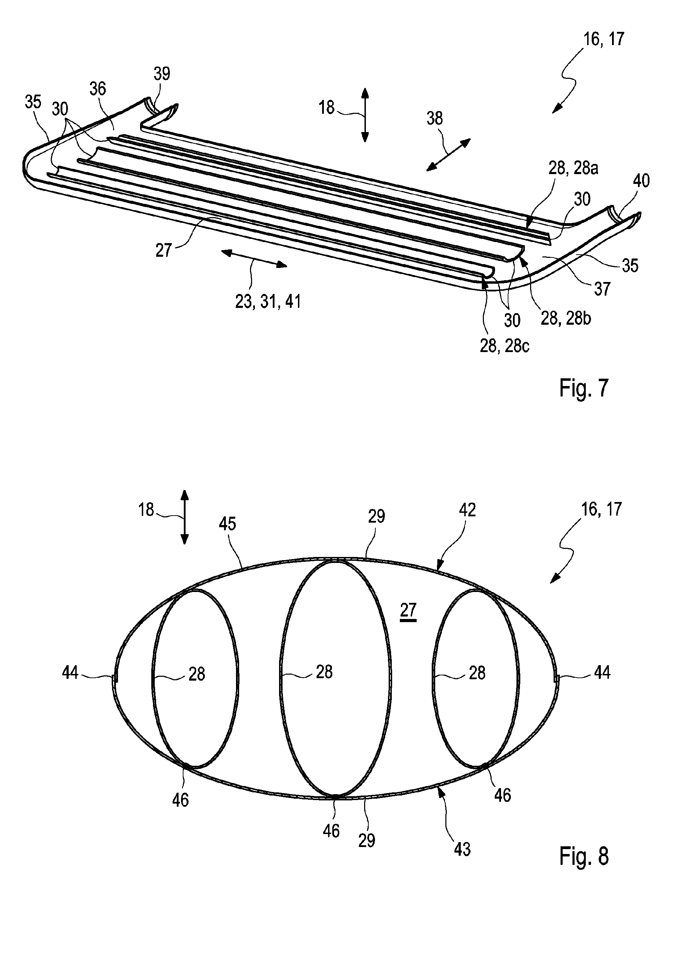

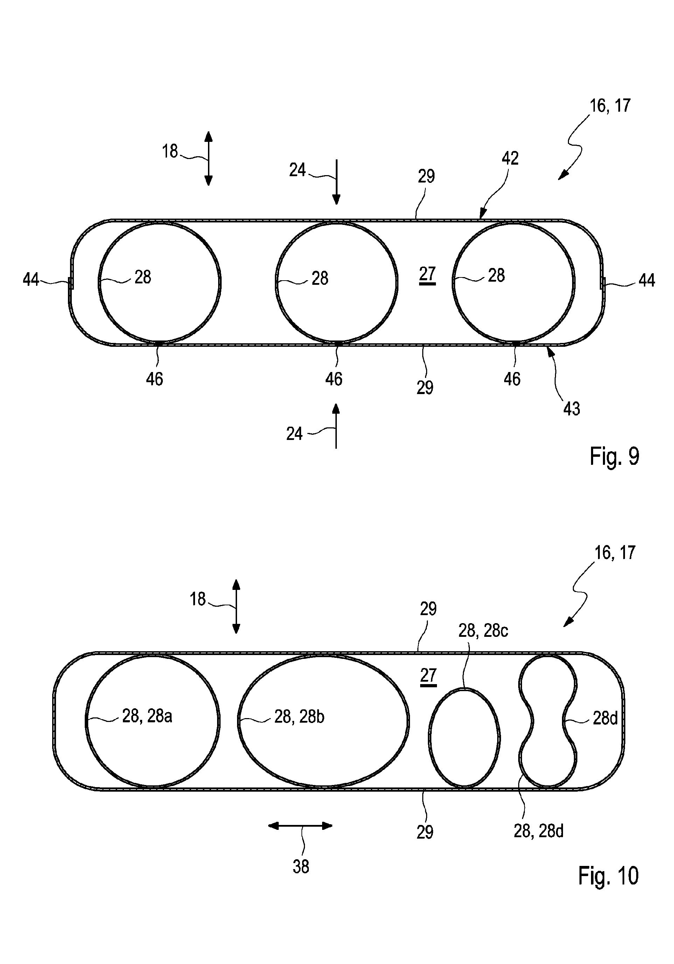

Wie sich insbesondere den Fig. 8 und 9 entnehmen lässt, kann das jeweilige Rohr 16, 17 beispielsweise in Halbschalenbauweise hergestellt sein, so dass das jeweilige Rohr 16, 17 zwei Halbschalen 42, 43 besitzt. Gemäß der in den Fig. 8 und 9 gewählten Darstellung lassen sich die beiden Halbschalen 42, 43 auch als Oberschale 42 und Unterschale 43 bezeichnen. Beide Halbschalen 42, 43 sind randseitig fest miteinander verbunden. Ein entsprechender Verbindungsbereich ist in den Fig. 8 und 9 mit 44 bezeichnet. Der Verbindungsbereich 44 kann beispielsweise mittels einer Schweißverbindung oder mittels einer Bördelverbindung hergestellt werden. Zweckmäßig lassen sich die Halbschalen 42, 43 gemäß den Fig. 6 und 7 so herstellen, dass sie jeweils einen halben Einlassstutzen 39 und einen halben Auslassstutzen 40 aufweisen, so dass beim Zusammenbauen der beiden Halbschalen 42, 43 zum jeweiligen Rohr 16, 17 der jeweilige Stutzen 39, 40 komplettiert wird.

Alternativ ist auch eine Segmentbauweise denkbar, die beispielsweise zwei Endstücke und ein Mittelstück umfasst. Je ein Endstück kann durch den Einlassbereich 36 und den Einlassstutzen 39, einerseits, und durch den Auslassbereich 37 und den Auslassstutzen 40, andererseits, gebildet sein. Das Mittelstück, an dem die beiden Endstücke axial stirnseitig angebaut sind, definiert einen Rohrkörper oder Mantelkörper, in dem die Stützrohre 28 angeordnet sind.

Die Rohre 16, 17 sind insgesamt als Flachrohre konzipiert, so dass sie einen flachen durchströmbaren Querschnitt aufweisen. Folglich ist der jeweilige durchströmbare Querschnitt des jeweiligen Rohrs 16, 17 in der Rohrquerrichtung 38 größer als in der Stapelrichtung 18.

Fig. 8 zeigt einen entspannten Zustand, der bei fehlender Druckkraft 24 vorliegt. Erkennbar ist eine Wandung 45 des jeweiligen Rohrs 16, 17 nach außen gewölbt. Im Beispiel der Fig. 8 besitzen die Stützrohre 28 jeweils einen elliptischen Querschnitt, dessen längere Achse in der Stapelrichtung 18 orientiert ist. Die Stützrohre 28 sind im Bespiel der Fig. 8 und 9 jeweils nur an einer der beiden Halbschalen 42, 43, hier an der Unterschale 43 befestigt, beispielsweise mittels einer Schweißverbindung 46. Im Beispiel der Fig. 8 und 9 sind die drei gezeigten Stützrohre 28 jeweils an derselben Halbschale 42, 43 nämlich an der Unterschale 43 befestigt. Denkbar ist auch eine Ausführungsform, bei der verschiedene Stützrohre 28 an verschiedenen Halbschalen 42, 43 befestigt sind.

Ferner sind die Stützrohre 28 in Fig. 8 exemplarisch so dimensioniert, dass sie im entspannten Zustand auch an der gegenüberliegenden Oberschale 42 anliegen. Im gespannten Zustand gemäß Fig. 9, der dadurch entsteht, dass die Druckkraft 24 aufgebracht wird, sind die Wandabschnitte 29, die sich in der Stapelrichtung 18 gegenüberliegen, jeweils vorzugsweise eben, wobei sie jeweils in einer senkrecht zur Stapelrichtung 18 verlaufenden Ebene liegen. Die Stützrohre 28 sind in diesem Zustand durch die Druckkraft 24 federelastisch verformt. Beispielsweise können die langen Achsen der elliptischen Querschnitte verkürzt werden, während gleichzeitig die kurzen Achsen der elliptischen Querschnitte vergrößert werden. Im vorgespannten Zustand gemäß Fig. 9 sind die Querschnitte der Stützrohre 28 im Wesentlichen kreisförmig. Da die Stützrohre 28 und auch das jeweilige Rohr 16, 17 durch die Druckkraft 24 elastisch verformt sind, können sie bei fehlender Druckkraft 24 wieder in den entspannten Zustand gemäß Fig. 8 zurückkehren.

Die Stützrohre 28 sind beispielsweise aus einem Edelstahl hergestellt. Das jeweilige Heizrohr 16 ist beispielsweise ebenfalls aus einem Stahlwerkstoff hergestellt. Das jeweilige Kühlrohr 17 ist beispielsweise aus einem Leichtmetallwerkstoff hergestellt.

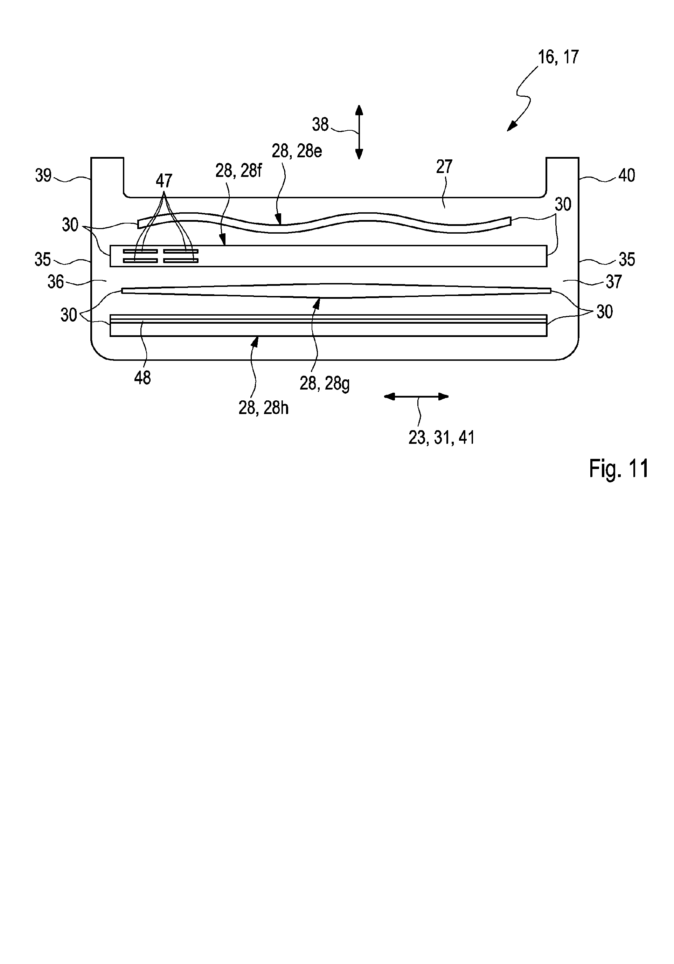

Fig. 10 zeigt nun rein exemplarisch eine andere Ausführungsform eines derartigen Kühl- oder Heizrohrs 16, 17, das vier Stützrohre 28 bzw. 28a, 28b, 28c und 28d enthält. Bei der in Fig. 11 gezeigten Ausführungsform enthält das Kühl- oder Heizrohrs 16, 17 vier andere Stützrohre 28 bzw. 28e, 28f, 28g und 28h. Fig. 10 zeigt dabei eine Variante, bei welcher die einzelnen Stützrohre 28 unterschiedliche Durchmesser aufweisen. Das Stützrohr 28a zeigt einen Kreisquerschnitt; das Stützrohr 28b zeigt einen elliptischen Querschnitt mit liegender langer Achse. Das Stützrohr 28c zeigt dagegen einen elliptischen Querschnitt mit stehender langer Achse, wobei hier außerdem vorgesehen sein kann, dass das Stützrohr 28c hinsichtlich seines Querschnitts so klein dimensioniert ist, dass es erst dann mit beiden gegenüberliegenden Wandabschnitten 29 in Kontakt kommt, wenn die Druckkraft 24 aufgebracht ist, was im Zustand der Fig. 10 nicht der Fall ist. Sofern im jeweiligen Kühl- oder Heizrohr 16, 17 zumindest ein Stützrohr 28 vorhanden ist, das vor dem Aufbringen der Druckkraft 24 beide Wandabschnitte 29 berührt, und gleichzeitig zumindest ein Stützrohr 28 vorhanden ist, das erst beim Aufbringen der Druckkraft 24 beide Wandabschnitte 29 berührt, kann gezielt eine besondere Druckkraftverteilung herbeigeführt werden. Auch lässt sich die Druckkraftverteilung innerhalb des Kühl- oder Heizrohrs 16, 17 durch die gleichzeitige Verwendung eines Stützrohrs 28 mit kreisförmigem Querschnitt und eines Stützrohrs 28 mit elliptischem Querschnitt gezielt beeinflussen.

In Fig. 11 ist mit dem Stützrohr 28d außerdem ein Stützrohr 28 gezeigt, das einen vergleichsweise komplexen Querschnitt aufweist, der hier im Beispiel in Form einer Acht realisiert ist. Durch die Querschnittsgeometrie, insbesondere über die verwendeten Radien, lässt sich die Federwirkung des jeweiligen Stützrohrs 28 gezielt einstellen.

Gemäß Fig. 11 können im Kühl- oder Heizrohr 16, 17 auch Stützrohre 28 angeordnet sein, die nicht parallel und geradlinig verlaufen. Beispielsweise kann sich das Stützrohr 28e in der Rohrlängsrichtung 31 bzw. 41 schlangenförmig erstrecken. Hierdurch lassen sich sowohl die Abstützwirkung als auch die Strömungsführungswirkung gezielt beeinflussen.

Gemäß Fig. 11 kann auch wenigstens ein Stützrohr 28f zwischen seinen Rohrenden 30 wenigstens eine seitliche oder radial Öffnung 47 aufweisen. Im Beispiel sind vier schlitzförmige Öffnungen 47 angedeutet. Derartige Öffnungen 47 können auch mit anderen Öffnungsquerschnitten oder in Form einer Perforation realisiert sein. Mittels derartiger Öffnungen 47 lassen sich die Federeigenschaft des jeweiligen Stützrohrs 28 und die Strömungsführungswirkung des jeweiligen Stützrohrs gezielt verändern.

Gemäß Fig. 11 kann auch wenigstens eines der Stützrohre 28 einen in seiner Längsrichtung 31 variierenden Querschnitt aufweisen. Beispielsweise nimmt beim Stützrohr 28g der Querschnitt mit zunehmendem Abstand von dem einen Rohrende 30 etwa bis zur Rohrmitte zu und danach bis zum anderen Rohrende 30 wieder ab. Gleichzeitig kann dabei auch eine Formänderung erfolgen, z.B. von kreisförmig an dem einen Rohrende 30 über elliptisch in der Rohrmitte wieder zu kreisförmig am anderen Rohrende 30. Auch diese Maßnahme kann zur gezielten Beeinflussung der Stützfunktion und der Strömungsführungsfunktion genutzt werden.

Schließlich zeigt Fig. 11 mit dem Stützrohr 28h eine Variante, bei welcher zumindest ein Stützrohr 28 entlang seiner gesamten Länge einen Schlitz 48 besitzt, also im Querschnittsprofil eine Unterbrechung aufweist. Hierdurch erhält das Stützrohr 28 einen offenen, im Wesentlichen C-förmigen Querschnitt. Auch diese Maßnahme kann zur gezielten Beeinflussung der Stützfunktion und der Strömungsführungsfunktion genutzt werden.

Durch die erfindungsgemäß vorgeschlagene Verwendung von mehreren Stützrohren 28, die sich durch unterschiedliche Geometrien voneinander unterscheiden, kann innerhalb des jeweiligen flachen Heizrohrs 16 bzw. Kühlrohrs 17 eine Strömungslenkung bzw. Strömungsführung für das Abgas bzw. für das Kühlmittel realisiert werden, die innerhalb des jeweiligen Rohres 16, 17 zu einer Homogenisierung der Temperaturverteilung in der Rohrquerrichtung 38 führt.

## Patentansprüche

1. Wärmeübertrager für eine Abgasanlage (5) einer Brennkraftmaschine (1), insbesondere eines Kraftfahrzeugs,
- mit mindestens einem Heizrohr (16) zum Führen von heißem Abgas der Brennkraftmaschine (1),
- mit mindestens einem Kühlrohr (17) zum Führen eines flüssigen Kühlmittels,
- mit mindestens einem thermoelektrischen Generator (13) zum Erzeugen einer elektrischen Spannung aus einer Temperaturdifferenz, der zwischen einem solchen Heizrohr (16) und einem solchen Kühlrohr (17) angeordnet ist,
- wobei das jeweilige Heizrohr (16), der jeweilige thermoelektrische Generator (13) und das jeweilige Kühlrohr (17) in einer Stapelrichtung (18) benachbart sind und einen Stapel (21) bilden,
- wobei im jeweiligen Heizrohr (16) und/oder im jeweiligen Kühlrohr (17) wenigstens ein Stützrohr (28) angeordnet ist, das sich in der Stapelrichtung (18) an einander zugewandten Wandabschnitten (29) des jeweiligen Rohrs (16, 17) abstützt,
**dadurch gekennzeichnet,**
**dass** zumindest zwei derartige Stützrohre (28) im jeweiligen Rohr (16, 17) quer zu ihrer Längsrichtung (31) nebeneinander angeordnet sind, die sich durch unterschiedliche Rohrlängen und/oder Rohrenden (30) und/oder Rohrquerschnitte voneinander unterscheiden.

2. Wärmeübertrager nach Anspruch 1,
**dadurch gekennzeichnet,**
- **dass** der Stapel (21) in der Stapelrichtung (18) mit einer Druckkraft (24) belastet ist, die das jeweilige Heizrohr (16), den jeweiligen thermoelektrischen Generator (13) und das jeweilige Kühlrohr (17) miteinander verspannt,
- **dass** das jeweilige Stützrohr (28) einen runden Rohrquerschnitt aufweist und durch die Druckkraft (24) federelastisch verformt ist.

3. Wärmeübertrager nach Anspruch 1 oder 2,
**dadurch gekennzeichnet,**
**dass** die Stützrohre (28) innerhalb des jeweiligen Kühl- oder Heizrohrs (16, 17) voneinander beabstandet sind.

4. Wärmeübertrager nach einem der Ansprüche 1 bis 3,
**dadurch gekennzeichnet,**
**dass** die Stützrohre (28) endseitig offen sind und im jeweiligen Heiz- oder Kühlrohr (16, 17) so angeordnet sind, dass sie vom Abgas oder vom Kühlmittel umströmbar und durchströmbar sind.

5. Wärmeübertrager nach einem der Ansprüche 1 bis 4,
**dadurch gekennzeichnet,**
**dass** zumindest ein solches Stützrohr (28) an seiner Außenseite zumindest einen abgeflachten Umfangsbereich (34) aufweist, der sich flächig an dem jeweiligen Wandabschnitt (29) des jeweiligen Kühl- oder Heizrohrs (16, 17) abstützt.

6. Wärmeübertrager nach einem der Ansprüche 1 bis 5,
**dadurch gekennzeichnet,**
- **dass** das jeweilige Kühl- oder Heizrohr (16, 17) an seinen Längsenden (35) einen Einlassbereich (36) und einen Auslassbereich (37) aufweist, die sich in einer Rohrquerrichtung (38) erstrecken, die quer zur Rohrlängsrichtung (41) und quer zur Stapelrichtung (18) verläuft,
- **dass** an den Einlassbereich (37) ein Einlassstutzen (39) in der Rohrquerrichtung (38) angeschlossen ist,
- **dass** an den Auslassbereich (37) ein Auslassstutzen (40) in der Rohrquerrichtung (38) angeschlossen ist.

7. Wärmeübertrager nach Anspruch 6,
**dadurch gekennzeichnet,**
**dass** die Stützrohre (28) in ihrer Längsrichtung (31) unterschiedlich tief in den Einlassbereich (36) und/oder in den Auslassbereich (37) eintauchen.

8. Wärmeübertrager nach Anspruch 6 oder 7,
**dadurch gekennzeichnet,**
**dass** zumindest ein Stützrohr (28) wenigstens ein abgeschrägtes Rohrende (30) aufweist, derart, dass eine Rohröffnung (32) am jeweiligen Rohrende (30) dem Einlassstutzen (39) oder dem Auslassstutzen (40) zugewandt ist.

9. Wärmeübertrager nach einem der Ansprüche 1 bis 8,
**dadurch gekennzeichnet,**
**dass** das jeweilige Heiz- oder Kühlrohr (16, 17) in Halbschalenbauweise hergestellt ist, wobei die Stützrohre (28) jeweils nur an einer der beiden Halbschalen (42, 43) befestigt sind.

10. Wärmeübertrager nach einem der Ansprüche 1 bis 9,
**dadurch gekennzeichnet,**
**dass** sich die Stützrohre (28) innerhalb des jeweiligen Kühl- oder Heizrohrs (16, 17) geradlinig und parallel zu einer Längsrichtung (41) des jeweiligen Kühl- oder Heizrohrs (16, 17) erstrecken.

## Claims

1. Heat exchanger for an exhaust system (5) of an internal combustion engine (1), in particular of a motor vehicle, comprising:
- at least one heating tube (16) for conducting hot exhaust gas of the internal combustion engine (1);
- at least one cooling tube (17) for conducting a liquid cooling agent;
- at least one thermoelectric generator (13) for generating an electrical voltage from a temperature difference, said generator being arranged between a heating tube (16) of this type and a cooling tube (17) of this type,
- each heating tube (16), thermoelectric generator (13) and cooling tube (17) being adjacent to one another and forming a stack (21) in a stacking direction (18),
- at least one support tube (28) being arranged in each heating tube (16) and/or in each cooling tube (17), which support tube is supported in the stacking direction (18) on wall portions (29) which face each other of each tube (16, 17),
**characterised in that** at least two support tubes (28) of this type are arranged next to one another in each tube (16, 17), transversely to the longitudinal direction (31) thereof, and differ from one another **in that** they have different tube lengths and/or tube ends (30) and/or tube cross sections.

2. Heat exchanger according to claim 1, **characterised in that**
- the stack (21) is loaded with a compressive force (24) in the stacking direction (18), which force braces each heating tube (16), thermoelectric generator (13) and cooling tube (17) together;
- each support tube (28) has a round tubular cross section and is elastically deformed by the compressive force (24).

3. Heat exchanger according to either claim 1 or claim 2, **characterised in that** the support tubes (28) are spaced apart from one another inside each cooling or heating tube (16, 17).

4. Heat exchanger according to any of claims 1 to 3, **characterised in that** the support tubes (28) are open at the ends thereof and are arranged in each heating or cooling tube (16, 17) such that the exhaust gas or the cooling agent can flow around and through said support tubes.

5. Heat exchanger according to any of claims 1 to 4, **characterised in that** at least one support tube (28) of this type has a flattened peripheral region (34) on the outside thereof that is supported in a planar manner on each wall portion (29) of each cooling or heating tube (16, 17).

6. Heat exchanger according to any of claims 1 to 5, **characterised in that**
- each cooling or heating tube (16, 17) has an inlet region (36) and an outlet region (37) at the longitudinal ends (35) thereof, which regions extend in a tube transverse direction (38) which extends transversely to the tube longitudinal direction (41) and transversely to the stacking direction (18),
- an inlet connection (39) is connected to the inlet region (37) in the tube transverse direction (38),
- an outlet connection (40) is connected to the outlet region (37) in the tube transverse direction (38).

7. Heat exchanger according to claim 6, **characterised in that** the support tubes (28) dip to different depths into the inlet region (36) and/or into the outlet region (37) in the longitudinal direction (31) of said support tubes.

8. Heat exchanger according to either claim 6 or claim 7, **characterised in that** at least one support tube (28) has at least one bevelled tube end (30), such that a tube opening (32) at each tube end (30) faces the inlet connection (39) or the outlet connection (40).

9. Heat exchanger according to any of claims 1 to 8, **characterised in that** each heating or cooling tube (16, 17) is produced as two half shells according to a semimonocoque design, the support tubes (28) being fastened only to one of the two half shells (42, 43).

10. Heat exchanger according to any of claims 1 to 9, **characterised in that** the support tubes (28) extend inside each cooling or heating tube (16, 17) in a straight line and parallel to a longitudinal direction (41) of each cooling or heating tube (16, 17).

## Revendications

1. Echangeur de chaleur pour une installation pour gaz d'échappement (5) d'un moteur à combustion interne (1), en particulier d'un véhicule automobile, comprenant :
- au moins un tube de chauffage (16) pour acheminer des gaz d'échappement chauds du moteur à combustion interne (1),
- au moins un tube de refroidissement (17) pour acheminer un agent réfrigérant liquide,
- au moins une génératrice thermoélectrique (13) pour produire une tension électrique à partir d'une différence de température, qui est disposée entre un tel tube de chauffage (16) et un tel tube de refroidissement (17),
- dans lequel le tube de chauffage respectif (16), la génératrice thermoélectrique respective (13) et le tube de refroidissement respectif (17) sont adjacents dans une direction d'empilement (18) et forment un empilement (21),
- dans lequel, dans le tube de chauffage respectif (16) et/ou dans le tube de refroidissement respectif (17) est disposé au moins un tube de support (28), qui s'appuie sur des sections de paroi (29), tournées l'une vers l'autre, du tube respectif (16, 17) dans la direction d'empilement (18),
**caractérisé en ce que** :
au moins deux de ces tubes de support (28) sont disposés l'un à côté de l'autre dans le tube respectif (16, 17) transversalement à leur direction longitudinale (31), lesquels tubes se distinguent l'un de l'autre par des longueurs de tubes et/ou des extrémités de tubes (30) et/ou des sections transversales de tubes différentes.

2. Echangeur de chaleur selon la revendication 1, **caractérisé en ce que** :
- l'empilement (21) est soumis, dans la direction d'empilement (18), à une force de compression (24) qui assujettit mutuellement le tube de chauffage respectif (16), la génératrice thermoélectrique respective (13) et le tube de refroidissement respectif (17), et
- le tube de support respectif (28) présente une section transversale ronde et est déformé de manière élastique par la force de compression (24).

3. Echangeur de chaleur selon la revendication 1 ou 2,
**caractérisé en ce que** :
les tubes de support (28) sont écartés l'un de l'autre à l'intérieur du tube de refroidissement ou du tube de chauffage respectif (16, 17).

4. Echangeur de chaleur selon l'une quelconque des revendications 1 à 3,
**caractérisé en ce que** :
les tubes de support (28) sont ouverts côté extrémité et sont disposés dans le tube de chauffage ou le tube de refroidissement respectif (16, 17) de sorte qu'ils puissent être contournés et traversés par les gaz d'échappement ou par l'agent réfrigérant.

5. Echangeur de chaleur selon l'une quelconque des revendications 1 à 4,
**caractérisé en ce que** :
au moins un tel tube de support (28) présente sur son côté externe au moins une zone de contour aplatie (34) qui s'appuie à plat sur la section de paroi respective (29) du tube de refroidissement ou du tube de chauffage respectif (16, 17).

6. Echangeur de chaleur selon l'une quelconque des revendications 1 à 5,
**caractérisé en ce que** :
- le tube de refroidissement ou le tube de chauffage respectif (16, 17) présente sur ses extrémités longitudinales (35) une zone d'admission (36) et une zone de décharge (37) qui s'étendent dans une direction (38) transversale aux tubes qui s'étend transversalement à la direction longitudinale (41) des tubes et transversalement à la direction d'empilement (18),
- une tubulure d'admission (39) est raccordée à la zone d'admission (37) dans la direction (38) transversale aux tubes, et
- une tubulure de décharge (40) est raccordée à la zone de décharge (37) dans la direction (38) transversale aux tubes.

7. Echangeur de chaleur selon la revendication 6, **caractérisé en ce que** :
les tubes de support (28) s'enfoncent dans la zone d'admission (36) et/ou dans la zone de décharge (37) sur une profondeur différente dans leur direction longitudinale (31).

8. Echangeur de chaleur selon la revendication 6 ou 7,
**caractérisé en ce que** :
au moins un tube de support (28) présente au moins une extrémité de tube biseautée (30) de sorte qu'une ouverture de tube (32) à l'extrémité de tube respective (30) soit tournée vers la tubulure d'admission (39) ou vers la tubulure de décharge (40).

9. Echangeur de chaleur selon l'une quelconque des revendications 1 à 8,
**caractérisé en ce que** :
le tube de chauffage ou le tube de refroidissement respectif (16, 17) est conçu en structure à demi-coques, dans lequel les tubes de support (28) sont respectivement fixés seulement à l'une des deux demi-coques (42, 43).

10. Echangeur de chaleur selon l'une quelconque des revendications 1 à 9,
**caractérisé en ce que** :
les tubes de support (28) s'étendent à l'intérieur du tube de refroidissement ou du tube de chauffage respectif (16, 17) en ligne droite et parallèlement à une direction longitudinale (41) du tube de refroidissement ou du tube de chauffage respectif (16, 17).
